# EUROPEAN PATENT APPLICATION

(11) **EP 1 939 229 A2**
(43) Date of publication of application: **02.07.2008**
(21) Application number: 07291599.4
(22) Date of filing: 21.12.2007
(51) Int. Cl.: C08F 10/02, C08F 2/34, C08F 2/00

(54) **Antistatic composition for polymerization or copolymerization of olefins in the gas phase, olefin polymerization or copolymerization process in the gas phase, and olefin polymer or copolymer thereof**

(30) Priority: 29.12.2006 BR PI0605781
(71) Applicant: Braskem S.A., 42810-000 Camaçari, BA (BR)
(72) Inventor: Kardec Do Nascimento, Alan, Porto Alegre (BR); Kunrath, Fabio Andrè, California Nova Santa Rita (BR); Miro Neto, Cid, Porto legre (BR)
(74) Representative: Vieillefosse, Jean-Claude

(57) **Abstract**

The present invention regards to an antistatic composition obtained from the combination of two antistatic agents, and its application in polymerization or copolymerization of olefins in the gas phase.

## Description

### TECHNICAL FIELD

The present invention refers to an antistatic composition constituted by a combination of a majoritary antistatic agent comprising at least one polyoxyethylalkylamine and a minoritary antistatic agent comprising at least one fatty acid sarcosinate, and its application in the polymerization or copolymerization process of ethylene, propylene or other alpha-olefins, promoted by catalytic systems constituted by a transition metal complex and an organometallic compound, and that presents at least one homopolymerization or copolymerization step in a gas phase-type reactor.

### INVENTION BACKGROUND

The olefin polymerization in low pressure processes, with the aid of catalysts supported by Phillips or Ziegler-Natta, has been already described in the literature for several times, and now it was broadly employed in an industrial scale.

These supported catalysts are solid components. The Ziegler-Natta-type catalysts comprise an inorganic support, more specifically a magnesium di-halide or silica in an active form, and a transitional metal compound containing at least one metal-halogen bond. The more improved forms use also an internal electron donor compound. The catalytic composition also comprises a cocatalyst, i.e, an activator of the external catalyst and optionally an external electron donor compound.

Among the processes more used, they highlights the processes of polymerization in the gas phase. The monomers to be polymerized, together with an inert compound, among which they highlights the nitrogen and propane, maintain the polymerization bed, where the polymer particles are formed, in the fluidized state, through the passage of the reactional mixture as an ascendant stream. The monomer acts at the same time as a reagent and as a circulating and cooling agent of the reactional mixture. The gaseous mixture leaves the polymerization reactor by the top of the fluidized bed and is recycled towards the bottom by a recycle piping and a compressor. In most of the cases, the gaseous mixture is cooled by a heat exchanger, by this way eliminating the heat generated in the polymerization process and maintaining constant the temperature of the fluidized bed. Examples of these polymerization processes are described by the patents US 4 427 573, EP-A 110 087, EP-A 230 019 and EP-A 260 647.

The polymerization step can be preceded or not by prepolymerization step of the catalytic system, according to the needs of the different processes or the properties aimed for the final resin.

During the ethylene, propylene and alpha-olefin homopolymerization or copolymerization reaction, in processes using gas phase reactors, it is frequently observed an agglomeration of polymer particles on the internal walls of reactors and heat exchangers in the form of deposits, due to the development of electrostatic charges as a function of the friction among the polymer particles in movement. Electrostatic charges are also generated by the collision of polymer particles with other metallic parts of the reactor. This phenomenon can also be easily observed when handling polymers in the powder form. If the electrostatic charges are formed in the surroundings of the reactor walls, occurs a tendency of particle adhesion to the walls, with a polymer layer formation, which is undesirable because it influences negatively in the system thermal exchange and, so, affecting the process continuity. If part of this material adhered to the reactor walls is partial or totally removed and mixed to the polymer in formation, it occurs a quality decrease of the resin, due to the appearance of the named gels or fish-eyes. The electrostatic charges can also induce the formation of polymer agglomerates, named clumps or potatoes, in the reactional mixture core. These agglomerates can lead to the operational discontinuity, if they reach such a size that causes obstruction of valves and piping. These deposits and agglomerates can grow in such a manner to make difficult or stop completely the passage of the reactional mixture, causing system interruptions for maintenance and cleaning.

Because of the above mentioned, several different manners of controlling the formation of these polymer agglomerates have been described in the specialized literature. The antistatic additives can be compounds from the most varying species, which have as a function to prevent the electrostatic charge formation. The ideal compounds for this purpose are, for example, saturated fatty acids salts of general formula RCOOM, where R is a C₁₂ to C₂₂ saturated aliphatic carbonic chain and M is a metal of the alkaline or alkaline earth metal family.

Sulphonate derivatives from esters or primary or secondary alcohols, of general formula ROSO3M or RR'CHSO3M, where the description of R' is the same as R, among others. One appropriate reference to antistatic compounds, which are also appropriate for utilization in ethylene, propylene and alpha-olefins polymerization and copolymerization, and in compliance with this invention, can be found in the publication EP-A1-0.107.127, pages 6 to 10.

The US patents 4.182.810, US 5.026.795 describe the utilization of an antistatic composition aiming to diminish the trend of the polymer particles to form agglomerates. The antistatic composition comprises one polysulphone and one polymeric polyamine. The antistatic composition, in particular, is the product STADIS 450®.

The references US 5.410.002, US 6.743.871 B2, US 2003/0176604 A1 and WO 09611961A1 describe the utilization of N-alkylethanolamines or quaternary amino salts of fatty acids, containing in its main chain from 12 to 22 carbon atoms, in the function of agents preventing the polymer layer or agglomerate formation. However, these, intrinsically present a poor dissipative action of electrostatic charges formed, requiring, for this reason, high doses in order to provide the desired effect, with a pronounced depreciative effect over the activity of the catalytic system. In particular, compositions presenting this type of compounds as majoritary components are commercialized by ICI under trademark ATMER®, especially the composition is the product ATMER® 163, and by Chemax Polymer Additives, under the trademarks Chemstat® and CHEMAX®, and especially the compositions are Chemstat® 122 and CHEMAX® -X-997 products.

The patents US 5 414 064 and EP-0-232 701 B2 describe the utilization of the antistatic composition for homopolymerization or copolymerization of the ethylene with alpha-olefins formed by a mixture of less than 1% of chromium anthralinate, 25 to 30% of calcium medialanate (N-oleoil calcium sarcosinate) and 5% of di-tert-butylphenol. The composition, in particular, is the product Kerostat CE 5009®. The antistatic composition prevents the clump and agglomerate formation inside the reactors, but, as clearly demonstrated in the subsequent patents EP-A-362629 e EP-A-364759, the polymers obtained generally present a low bulk density and the films thereof present impurities in the form of non-molten particles (gels or fish-eyes).

Patent PI0506110-5 describes an antistatic composition for olefin polymerization or copolymerization in suspension. However, the composition described in the mentioned patent has not shown to be efficient when used in olefin polymerization or copolymerization in the gas phase process, because there has been the polymer agglomerate formation, named clumps or potatoes, causing a number of interruptions in the reactors to perform their cleaning in order to proceed the process.

According to the reported above, none of the compositions previously described presents a definitive solution for the operational stability and product quality problems, which occur in olefin polymerization process in the gas phase.

The addition of antistatic agents to reactional medium should comprise both the increase of the electric conductivity of the medium and the prevention of electrostatic charges formation, and thus, diminish the tendency of the particles to migrate to the walls of reactors and heat exchangers, hence forming agglomerates and deposits. In addition, the catalytic system activity should not be negatively influenced. It is well known that a reduced amount of antistatic agent in the system does not have the desired effect, not preventing the formation of particle agglomerates, whereas high amounts may induce the generation of polymers presenting an adhesive nature, difficult to handle, in addition to prejudice the catalytic system activity.

Surprisingly, the use of the combination of antistatic compositions has shown to supply perfectly the process operational needs in terms of stability, considering the reduced dosing required, without need for reactor interruptions and openings for the removal of polymer particle deposits, without impacting negatively the catalytic system activity and, with excellent properties for the polymers obtained.

The open literature does not describe or suggest the matter described and claimed in the present order, because it does not show an antistatic composition obtained from synergic compositions containing a combination of antistatic agents, formed by a fatty acid sarcosinate and a polyoxyethylalkylamine, whose characteristics are optimized as a function of dissipation and prevention of the rising of electrostatic charges formed during ethylene and alpha-olefin homopolymerization and copolymerization.

### INVENTION SUMMARY

The present invention refers to an antistatic composition formed by the combination of a majoritary antistatic agent comprising at least one polyoxyethylalkylamine, and one minoritary antistatic agent comprising at least one fatty acid sarcosinate, and its application in a polymerization or copolymerization process of ethylene, propylene and other alpha-olefins, promoted by catalytic systems formed by a transition metal complex, and an organometallic compound, presenting at least one step of homopolymerization or copolymerization in a gas phase type reactor. The resultant polymer presents a very low adherence to the reactor walls, agitators and heat exchangers, thus allowing a long time of continuous system operability, while it maintains a high productivity and stable operating conditions.

The composition of antistatic agents, according to the present invention, comprises particularly the following components:
a) a majoritary antistatic agent comprising at least one polyoxyethylalkylamine.
b) a minoritary antistatic agent containing, in greater amount, at least one salt of alkaline metal or alkaline earth metal derived from the N-oleoil sarcosinic acid, and optionally in smaller amount, at least one salt of alkaline metal or alkaline earth metal derived from other sarcosinic acids presenting saturated or unsaturated carbonic chains containing from 6 to 22 carbon atoms in the main chain.

Thus, the present invention provides a composition of a majoritary antistatic agent comprising at least one polyoxyethylalkylamine with a minoritary antistatic agent derived from a sarcosinate of fatty acid in order to improve the ethylene, propylene or alpha-olefin polymerization or copolymerization, improving the thermal exchange of reactors and heat exchangers, and increasing the time interval between plant interruptions for system cleaning and maintenance.

The present invention additionally provides one composition used in prevention and dissipation of electrostatic charges formed during the polymerization or copolymerization process of ethylene, propylene or alpha-olefins, where the activity of the catalytic system employed in the polymerization reaction does not suffer depreciation, and the defect incidence (gels or fish-eyes) in the polymers obtained in this process is minimized, with improvement of the optic properties and without impact on the mechanical properties of the polymers generated in this process.

### DETAILED DESCRIPTION

In an overview, the present invention consists in an antistatic composition including two antistatic agents comprising respectively at least one polyoxyethylalkylamine, and at least one sarcosinate of fatty acid, and its application in the polymerization or copolymerization of ethylene, propylene and alpha-olefins.

In the present report the terms above have the following meanings:
- Gels or fish-eyes: are non-molten polymer particles, which appear when resin is processed, for example, when obtaining polymer films. They are generated by high molecular weight polymer particles, which do not melt in resin processing standard conditions. They appear as elliptic or round imperfections with the same color as the film. They vary a lot in size, from weakly visible to nearly 1.5 mm in diameter. The film obtained in the presence of the gels or fish-eyes, shows a trend to rupture or tear, which decreases resin quality. The number of gels is determined through the film analysis in an extruder machine endowed with a laser sensor, which performs the automatic count of the number of gels (defects).
- **Alpha-Olefin:** are olefins of the type CH₂=CHR, where R is an alkyl- or aryl-type radical having from 1 to 10 carbon atoms.

The fatty acids can be obtained from vegetable natural sources, such as sunflower, corn, soy, rice or olive oil, and also from animal fat. They have a varied composition as a function of the obtaining source, with greater or lesser amounts of saturated fatty acids, among them the palmitic and stearic, mono-unsaturated, such as palmitoleic and oleic or poly-unsaturated, such as linoleic and linolenic.

Sarcosine is a naturally occurring amino acid. It can be produced, for example, by caffeine decomposition in the presence of barium carbonate. Sarcosinates are commercially obtained from formaldehyde, alkaline and alkaline earth metal cyanides and methylamine. Fatty acid sarcosinates can be easily obtained from a direct reaction between alkaline and alkaline earth metal sarcosinates, and the fatty acid, in an alkaline medium.

Polymerization processes in gas phase, especially polyethylene and polypropylene production processes uses antistatic agents or compositions destined to increase the operability time of these processes, preventing frequent interruptions for cleaning and maintenance of polymerization reactors and heat exchangers.

The composition described and claimed by the present invention is used as an antistatic agent in preventing and dissipating electrostatic charges during the process of polymerization or copolymerization of ethylene, propylene or alpha-olefins and, hence, improving the operational process stability, and gaining in quality of resins obtained in terms of optical properties and without impact in mechanical properties. The combined use of a majoritary product selected among the polyoxyethylalkylamines and a minoritary product derived from a fatty acid sarcosinate presents synergies, resulting in a composition with very high antistatic power, which reflects positively in the polymerization process and the final resin properties, and does not present a significant depreciative effect on the activity of the catalytic system employed.

As indicated, the present invention is applied in preparation of homopolymers of ethylene, propylene or alpha-olefins, or copolymers of ethylene and propylene with alpha-olefins of the type CH₂=CHR, where R is an alkyl or aryl radical containing 1 to 10 carbon atoms.

Substances appropriate to be used as an inert agent and a diluent in the present process include non-polar hydrocarbons containing between 3 and 50 carbon atoms, preferentially between 3 and 20 carbon atoms. Specific examples are the aliphatic hydrocarbons, for instance, propane, isobutane, pentane, hexane, heptane, octane or liquid olefins, and alicyclic hydrocarbons such as, cyclohexane. Preferentially is used propane, isobutane and hexane, or their combinations.

Polymerization conditions used include conventional and well known conditions of the state of the technique for gas phase polymerization, such as polymerization temperatures varying between 0 and 120 °C, preferentially between 50 and 110 °C, under monomer pressure conditions from atmospheric pressure until 500 atmospheres, preferentially between 1 and 200 atmospheres, in the absence of water, oxygen and, in most of the cases, in the presence of a molecular weight regulator such as hydrogen.

Polymerization can be performed in different types of reactors, in a continuous way or in batches. Polymerization catalyst may be any conventional catalyst for olefin polymerization. For example, when two or more olefins, such as ethene and butene, are copolymerized, it may be employed catalysts of Phillips or Ziegler-Natta types. Phillips-type catalysts appropriate to be used in the present process include chromium oxide VI supported in refractory oxides such as silicas, silica-alumina and alumina. Ziegler-Natta-type catalysts are compounds of metal from groups 4, 5 or 6 of the periodic table, containing at least one metal-halogen binding, supported on active Mg-di-halide or silica.

The catalytic system employed consists of the contact of the mentioned catalyst with an alkylaluminum compound, comprising an organometallic compound from the groups 1, 2, 12 and 13 of the periodic table. Specific examples of these compounds are trimethyl-aluminum (TMA), triethyl-aluminum (TEAL), tri-isobutyl-aluminum (TIBAL), methyl-aluminum dichloride, methyl-aluminum sesquichloride, isobutyl-aluminum dichloride, isobutyl-aluminum sesquichloride, ethyl-aluminum dichloride (EADC), diethyl-aluminum chloride (DEAC), ethyl-aluminum sesquichloride (EASC), tri-n-hexyl-aluminum (Tn-HAL), tri-n-octyl aluminum (Tn-OAL) and dimethylaluminum chloride (DMAC). They can be used concentrated or preferentially diluted in an organic solvent chosen from aliphatic hydrocarbons.

The Al/M ratio or the cocatalyst/transition metal ratio of the catalytic system is greater than 1 and generally within the interval from 5 to 2000 and preferentially between 7 and 1000.

The antistatic agent composition, according to the present invention, comprises the following components:
a) a majoritary antistatic agent comprising at least one polyoxyethylalkylamine;
b) a minoritary antistatic agent containing, in greater amount, at least one alkaline or alkaline earth metal salt of the N-oleoil sarcosinic acid, and optionally, in a smaller amount, at least one alkaline or alkaline earth metal derived from other sarcosinic acids presenting saturated or unsaturated carbonic chains containing 6 to 22 carbon atoms in the main chain.

Suitable products to be used as majoritary antistatic agent (a) are the polyoxyethylalkylamines, particularly di-ethanolamines with general formula CH₃(CH₂)ₙN(CH₂-CH₂-OH)₂, where n is greater than 2 and preferentially is between 6 and 20. Minimum content of present tertiary amines should be 95%, which serves as an indicator of the product purity, and a water content of 5,000 ppm as a maximum.

Preferentially, the minoritary agent (b) consists of 60 to 98% in weight of at least one alkaline or alkaline earth metal salt of the N-oleoil sarcosinic acid, and 2 to 40% in weight of at least one alkaline or alkaline earth metal salt derived from other sarcosinic acids, especially sarcosinates of linoleic, linolenic, palmitoleic, myristic, palmitic, stearic, araquidic, behenic and lignoceric acids. Among the alkaline and alkaline earth metals, those suitable to be used in the composition of the majoritary antistatic agent (b) are the sodium, potassium, magnesium and calcium, being preferred calcium. The content of unsaponificable impurities present should be extremely low, being between 0 and 1.2% in weight, preferentially between 0 and 0.5%, allowing its use without any restraints in the polymerization and copolymerization process of ethylene, propylene and alpha-olefins.

According to the present invention, the antistatic agent composition can be obtained by the mixture between the majoritary antistatic agent (a) and the minoritary antistatic agent (b) by several means. Means used are not critical to obtain the final result. Among the possible options, it can be mentioned, for example the previous physical mixture of the agents (a) and (b), the dissolution of the two agents (a) and (b) in a suitable solvent, like mineral oil or saturated aliphatic solvents, obtaining a mixture of the components, or the dissolution of component (a) in a suitable solvent and the dissolution of component (b) in another solvent and the addition of both to the polymerization process in the same point or in separate points.

In general, the antistatic composition of the present invention should be added to the polymerization medium at proportion between 1 and 2.000 ppm in weight related to total resin mass obtained in the polymerization reaction. Molar ratio between antistatic composition and alkylaluminum compound (cocatalyst) should be placed between 0.01 and 0.9. Ideal antistatic agent composition of the present invention should be in the range of:
- 51 to 99% in weight of the majoritary antistatic agent (a), preferentially between 58 and 97% in weight; and
- 1 to 49% in weight of the minoritary antistatic agent (b), preferentially between 3 and 42% in weight.

As the main advantage due to the present invention, we have as a result a smaller consumption of the antistatic composition, when compared to the antistatic agent consumption in other processes currently known, as a function of the better performance of the combination used. It is possible to prevent clump formation inside the reactional mixture, and the deposition and adhesion of polymer particles on the inner walls of reactors, agitators and heat exchangers when is carried out the ethylene, propylene or alpha-olefin polymerization or copolymerization in gas phase processes. Thus, it is possible to prevent the obstruction of pipes and valves and the heat exchange loss, allowing conduct polymerization reaction under stable conditions for a long time period.

Preventing agglomerate and deposit formation, and their mixture with the polymer formed in the process, it was possible to improve the quality of resins obtained, in terms of optical and mechanical properties, presenting a smaller amount of defects (gels or fish-eyes), being observed greater activity and yield of the catalytic system.

After description of the present invention, a better understanding can be obtained evaluating the following examples, which are herein described in a merely illustrative purpose and are not limiting, and could be other the means through which the invention can be performed.

### EXAMPLES

In order to reach a better understanding of the present invention, it is presented, as follows, examples regarding to the tests representing the present invention, as the comparative examples.

### EXAMPLES FROM 1 TO 6

The following examples are related to some tests carried out to evaluate the effectiveness of some compounds as antistatic agents, and their influence on the catalytic system activity in the process of the present invention.

In a 3.5-L steel reactor equipped with a cooling jacket and a mechanical agitator spinning at 300 revolutions per minute and kept at 75° C, it was successively introduced under nitrogen atmosphere, 1800 mL of n-hexane, the catalytic complex consisting of TiCl₄ supported on MgCl₂ and triethylaluminum, in a proportion of Al/Ti = 300, suspended in 100 mL of hexane or isoparafine and the antistatic agent dissolved in hexane or isoparafine. After the stabilization of temperature in test conditions the reaction was initiated by addition of 7 bar of ethylene. The ethylene pressure was kept constant during the reaction time, being the ethylene consumed replaced by a flow controller connected to a pressurized ethylene vessel. The reaction time was 2 hours.

The result of these tests is summarized in the table I below. The results clearly show that the dosage increase of the polyetoxialquilamines as an antistatic agent in the polymerization reaction, has pronounced deleterious action under the activity of the catalytic system.

**Table I: The polymerization reactions in a bench scale, for evaluation of catalytic system activity in the presence of antistatic agents.**

| **Test n°** | **Combination of Antistatic Agents** | **Amount of Antistatic Agent Added** | **Polymer Mass** | **Productivity** |
|---|---|---|---|---|
| | (1:2)^{(a)} | (ppm)^{(b)} | (g) | (Kg of polymer/g catalyst) |
| I | 1/0 | 0 | 394 | 23.0 |
| II | 1/0 | 100 | 352 | 17.7 |
| III | 1/0 | 200 | 174 | 8.7 |
| IV | 0/1 | 60 | 389 | 22.0 |
| V | 0/1 | 100 | 372 | 21.0 |
| VI | 0/1 | 200 | 370 | 20.9 |

(a) Relationship between the amounts in weight of the antistatic agents: (1) polyethoxyalkylamine (100%), Atmer 163® and (2) calcium sarcosinate of (composition:30% of active agent, 40% of isoparafine and 30% of naphta), Kerostat CE 5009®.
(b) Mass relationship w/w regarding to solvent mass used in reaction.

The addition of 200 ppm (Test n° III) of polyethoxyalkylamine in the reactional medium causes a decrease of approximately 62% in the catalyst activity when compared to an activity obtained in the reaction where the antistatic agent was not used (Test n° I).

It can be also verified that the use of antistatic agent based upon calcium sarcosinate salt has an effect much less pronounced on the catalytic system activity, comparing the same dosage levels (compare tests II and V and tests III and VI).

### EXAMPLE 7

This test was carried out in a pilot plant operating in a continuous manner for HDPE production. It was used the catalytic system based in TiCl₄ supported on MgCl₂. The operating conditions are indicated in the table below. The ethylene was polymerized in a continuous manner in a gas phase type reactor with fluidized bed, in the presence of the catalytic system described above and using tri-isobutylaluminum chloride (TiBAL) as a cocatalyst.

| Main operating conditions | |
|---|---|
| Catalyst [g/h] | 19 - 20 |
| Temperature [°C] | 76 |
| Residence time (hours) | 1.5 - 1.6 |
| H₂/Ethene (%molar) | 3.5 |
| Comonomer (%molar) | 0.055 |
| Pressure [Kgf/cm2] | 21 - 24 |
| Alkylaluminum [TYPE] | TiBAL |
| Alkylaluminum / Cat [mass] | 2.00 |
| Activity [KgPE/gCAT] | 4.55 |

| Resin Properties | |
|---|---|
| Apparent Density (g/cm³) | 0.44 |
| Density (g/cm³) | 0.953 |

To the polymerization reaction was added an combination of antistatic agents in a proportion of 80% of the majoritary antistatic agent and 20% of the minoritary antistatic agent in mass, solubilized in isoparafine. Reference composition used as a minoritary antistatic agent was the product Kerostat CE5009®. The reference composition used as majoritary antistatic agent was ATMER 163®. The antistatic combination feed was set to a 0.03 ratio regarding to the total amount of cocatalyst added to the reactional medium. As a result, it was obtained high density polyethylene from the reactor in a rate of 91 kg/h. The catalytic system activity was 4.55 Kg/g.

According to this operating procedure, normal and stable operating conditions were able to be developed over several days. After the interruption of the unit for inspection, a close verification showed that the polymer deposition on the reactor and heat exchangers walls was insignificant. The polyethylene produced over this period presented great homogeneity and little variation of the resin properties.

### REFERENCE 1, COMPARATIVE TO EXAMPLE 7

It was used the same described process as in the example 7, with the same operating conditions, except that only the antistatic agent upon polyethoxyalkylamine was added to the polymerization process. It was observed a decrease of 24% in the reactivity of catalytic system. After inspection, it was verified a great amount of clumps and agglomerates in the reactor.

### REFERENCE 2, COMPARATIVE TO THE EXAMPLE 7

It was used the same described process as in the example 8, with the same operating conditions, except that no based antistatic agent was added to the polymerization process. Great amounts of polymer were adhered to the reactor and the heat exchanger walls, and a gradual loss of thermal conductivity and the thermal transfer capacity of the system was observed. All activities had to be interrupted after an 8-hour operation.

### EXAMPLE 8

This test was carried out in an industrial plant operating in a continuous manner for HDPE production. It was used the catalytic system prepared according to the description of the example 7. The catalyst was pre-polymerized in a proportion of 7:1 in mass. The operating conditions of the polymerization process are mentioned in the table below.

The ethylene was polymerized in a continuous manner in a reactor of gas phase type with fluidized bed, in the presence of catalytic system and using tri-ethylaluminum (TEA) as cocatalyst.

| Main operating conditions | | |
|---|---|---|
| Temperature | °C | 75 - 76 |
| Pressure | kgf/cm² | 17.0 - 27.0 |
| Residence Time | h | 4 - 5 |
| Relationship H₂/Ety | molar ratio | 2 - 3 |
| Comonomer | molar ratio | 0.06 |
| Catalyst | Kg/h | 3 |
| Alkylaluminum | - | TEA |
| Alkylaluminum | mass ratio | 1.5 - 2 |

To the polymerization reaction was added an combination of antistatic agents in a proportion of 90% of majoritary antistatic agent and 10% of the minoritary antistatic agent in mass, solubilized in isoparafine. The antistatic combination feed was adjusted in a ratio of 0.08 regarding to the total amount of the cocatalyst added. The catalytic system activity was 7.12 Kg/g. As a result, it was obtained high density polyethylene from reactor, with the characteristics described below, in a rate o 21.1ton/h.
Density: 0.949 g/cm³ (at 23°C)
Ml Fluidity Index 21.6 (190°C) = 8.97 g/10 min
Apparent Density: 0.45 g/cm³
FI Ratio 2.16/21.6 = 28.9

According to this operating procedure, normal and stable conditions were able to be developed over 396 hours. After the interruption of the unit for inspection, a close verification showed that the polymer deposition on the walls of reactors and heat exchangers was insignificant. The polyethylene produced over this period presented great homogeneity and little variation of the resin properties. When the polymer was extruded in order to obtain the film, it was verified almost a complete absence of film imperfections (gels or fish-eyes).

### EXAMPLE 9, COMPARATIVE TO EXAMPLE 8

It has been used the same process described in example 8, using the same operational conditions. To polymerization reaction it was added only the antistatic compound based upon polyoxyethylalkylamine. Antistatic agent feed was set in the same proportion used in the previous example.

According to this operating procedure, there has been the need for stopping the unit after 14-hr operation due to clump formation inside the reactor and obstruction of the polymerization reactor discharge valve. Catalytic yield was 6.5 kg/g, or 10% lower than that obtained using the antistatic agent composition. It was verified in the beginning of the test, a good film quality, which has been degrading until it was necessary to stop the unit. This result is agreeable with the theory of agglomerate formation on reactor walls, which some time afterwards fall inside the reactional mixture, worsening the optical qualities of the resins obtained.

## Claims

1. Antistatic composition for polymerization or copolymerization of olefins in gas phase, **characterized** as being formed by the combination of a majoritary antistatic agent comprising at least one polyoxyethylalkylamine and a minoritary antistatic agent comprising at least one fatty acid sarcosinate.

2. Antistatic composition for polymerization or copolymerization of olefins in gas phase according to the claim 1, **characterized by** the minoritary antistatic agent contain, in greater amount, at least one salt of alkaline or alkaline earth metal derived from the N-oleoil sarcosinic acid and, optionally, in a smaller amount, at least one salt of alkaline or alkaline earth metal derived from other sarcosinic acids presenting saturated or unsaturated carbonic chains containing from 6 to 22 carbon atoms in the main chain.

3. Antistatic composition for polymerization or copolymerization of olefins in gas phase according to the claims 1 and 2, **characterized by** the minoritary agent preferentially consisting of 60 to 98% in weight-, of at least one salt of alkaline or alkaline earth metal of the N-oleoil sarcosinic acid and 2 to 40% in weight of at least one salt of alkaline or alkaline earth metal derived from other sarcosinic acids, in special, sarcosinates of linoleic, linolenic, palmitoleic, myristic, palmitic, stearic, araquidic, behenic and lignoceric acids.

4. Antistatic composition for polymerization or copolymerization of olefins in gas phase according to the claim 1, **characterized by** the majoritary antistatic agent being composed of polyoxyethylalkylamines, particularly the diethanolamines of general formula CH₃(CH₂)ₙN(CH₂-CH₂-OH)₂, where n is greater than 2 and preferentially is between 6 and 20.

5. Antistatic composition for polymerization or copolymerization of olefins in gas phase according to the claims 1 and 4 **characterized by** the minimum content of tertiary amines should be 95%, which works as a product purity indicator, and water content at most of 5,000 ppm.

6. Antistatic composition for polymerization or copolymerization of olefins in gas phase according to the claim 1, **characterized by** the alkaline and alkaline earth metals as being those suitable to be used in the composition of the minoritary antistatic agent, among which are the sodium, potassium, magnesium and calcium, being preferred the calcium.

7. Antistatic composition for polymerization or copolymerization of olefins in gas phase according to the claim 1, **characterized by** being applied in the preparation of homopolymers of ethylene, propylene, or alpha-olefins or copolymers of ethylene and propylene with alpha-olefins of the type CH₂=CHR, where R is an alkyl or aryl radical containing 1 to 10 carbon atoms.

8. Antistatic composition for polymerization or copolymerization of olefins in gas phase according to the claims 1 to 7 **characterized by** substances suitable for the use as an inert agent and as a diluent in the present process to include non-polar hydrocarbons containing between 3 and 50 carbon atoms, preferentially between 3 and 20 carbon atoms.

9. Antistatic composition for polymerization or copolymerization of olefins in gas phase according to the claims 1 to 8, **characterized by** the non-polar hydrocarbons used as an inert agent and the diluent can be the aliphatic hydrocarbons, such as propane, isobutane, pentane, hexane, heptane, octane or liquid olefins and-, alicyclic hydrocarbons, as for example, cyclohexane.

10. Antistatic composition for polymerization or copolymerization of olefins in gas phase according to the claims 1 to 9, **characterized by** the aliphatic hydrocarbons preferentially being the propane, isobutene and hexane, or their combinations.

11. Antistatic composition for polymerization or copolymerization of olefins in gas phase according to the claim 1 **characterized by** the catalytic system employed consisting in the contact of the mentioned catalyst with one alkylaluminum compound, comprising one organometallic compound from groups 1, 2, 12 and 13 of the periodic table.

12. Antistatic composition for polymerization or copolymerization of olefins in gas phase according to the claims 1 and 11, **characterized by** the alkylaluminum compound can be the trimethylaluminum (TMA), tri-ethylaluminum (TEAL), tri-isobutylaluminum (TIBAL), methylaluminum dichloride, methylaluminum sesquichloride, isobutylaluminum dichloride, isobutylaluminum sesquichloride, ethylaluminum dichloride (EADC), di-ethylaluminum chloride (DEAC), ethylaluminum sesquichloride (EASC), tri-n-hexylaluminum (Tn-HAL) tri-n-octylaluminum (Tn-OAL) and dimethylaluminum chloride (DMAC).

13. Antistatic composition for polymerization or copolymerization of olefins in gas phase according to the claims 1, 11 and 12, **characterized by** the alkylaluminum compounds can be used concentrated or, preferentially, diluted in an organic solvent chosen from the aliphatic hydrocarbons.

14. Antistatic composition for polymerization or copolymerization of olefins in gas phase according to the claims 1, 11, 12 and 13 **characterized by** the ratio Al/M, or the ratio cocatalyst/transition metal of the catalytic system is higher than 1 and generally comprised between 5 and 2000 and preferentially between 7 and 1000.

15. Antistatic composition for polymerization or copolymerization of olefins in gas phase according to the claim 1, **characterized by** the content of present unsaponificable impurities should be between 0 and 1.2% in weight, preferentially between 0 and 0.5%, allowing its utilization without restrictions in the polymerization and copolymerization process of ethylene and alpha-olefins.

16. Antistatic composition for polymerization or copolymerization of olefins in gas phase according to the claim 1, **characterized by** the antistatic agent composition can be obtained by the previous physical mixture between the majoritary antistatic agent (a) and the minoritary antistatic agent (b), or the dissolution of the two agents (a) and (b) in a suitable solvent such as mineral oil or saturated aliphatic solvents, obtaining a component mixture, or dissolution of the component (a) in a suitable solvent and the dissolution of component (b) in other solvent and the addition of both to the polymerization process in the same point or in separate points.

17. Antistatic composition for polymerization or copolymerization of olefins in gas phase according to the claims 1 to 16, **characterized by** the mentioned composition being used as an antistatic agent in preventing and dissipating the electrostatic charges during the polymerization or copolymerization process of ethylene, propylene or alpha-olefins.

18. Polymerization or copolymerization process of olefins in gas phase **characterized by** containing an antistatic composition formed by the combination of a majoritary antistatic agent comprising at least one polyoxyethylalkylamine and a minoritary antistatic agent comprising at least one fatty acid sarcosinate, according to the definition of any claim from 1 to 17.

19. Polymerization or copolymerization process of olefins in gas phase according to the claim 18 **characterized by** the polymerization activity can be carried out in different types of reactors, in a continuous manner or in batches.

20. Polymerization or copolymerization process of olefins in gas phase according to the claim 18 **characterized by** the antistatic composition in the present invention should be added to the polymerization medium in a proportion between 1 to 2.000 ppm in weight regarding to the total mass of resin obtained in polymerization reaction.

21. Polymerization or copolymerization process of olefins in gas phase according to the claims 18 to 20, **characterized by** the molar ratio between the antistatic composition and the alkylaluminium compound (cocatalyst) is placed between 0.01 and 0.9.

22. Polymerization or copolymerization process of olefins in gas phase according to the claim 18, **characterized by** ideal composition of the antistatic agent of present invention is in the range of:
- 51 to 99% in weight of the majoritary antistatic agent (a), preferentially between 58 and 97% in weight; and
- 1 to 49% in weight of the minoritary antistatistc agent (b), preferentially between 3 and 42% in weight.

23. Polymerization or copolymerization process of olefins in gas phase according to the claim 18, **characterized by** the activity of the catalytic system employed in the polymerization reaction does not suffer depreciation.

24. Polymer or copolymer of olefin **characterized by** being obtained by the gas phase process where is use an antistatic composition formed by the combination of the majoritary antistatic agent, comprising at least one polyoxyethylalkylamine, and one minority antistatic agent comprising at least one fatty acid sarcosinate, according to definition of any claim from 1 to 23.

25. Polymer or copolymer of olefin according to claim 24, **characterized by** presenting very low adherence to the walls of reactors, agitators and heat exchangers, allowing a long time of continuous operability of the system, while it maintains a high productivity and stable operating conditions.
